# EUROPÄISCHE PATENTSCHRIFT

(11) **EP 1 228 396 B1**
(45) Veröffentlichungstag und Bekanntmachung des Hinweises auf die Patenterteilung: **18.04.2007**
(21) Anmeldenummer: 00987060.1
(22) Anmeldetag: 27.10.2000
(51) Int. Cl.: G02F 1/13, G02F 1/1345

(54) **FRONTEINHEIT EINES ELEKTRISCHEN GERÄTES**
FRONT UNIT OF AN ELECTRIC DEVICE
UNITE FRONTALE D'UN APPAREIL ELECTRIQUE

(30) Priorität: 09.11.1999 DE 19954841; 27.06.2000 DE 10031251
(43) Veröffentlichungstag der Anmeldung: 07.08.2002
(73) Patentinhaber: SIEMENS AKTIENGESELLSCHAFT, 80333 München (DE)
(72) Erfinder: LUDE, Eric, 13129 Berlin (DE)
(86) Internationale Anmeldenummer: PCT/DE2000/003842
(87) Internationale Veröffentlichungsnummer: WO 2001/035160

(56) Entgegenhaltungen:
- EP-A- 0 524 430
- US-A- 4 295 711

## Beschreibung

Flüssigkristall-Anzeigeelemente sind seit langem bekannt und werden weitverbreitet eingesetzt. Die Flüssigkristall-Anzeigeelemente sind mit elektrischen Kontaktflächen versehen, von denen Leiter zu einer elektrischen Steuereinrichtung führen. Mit solchen Flüssigkristall-Anzeigeelementen lassen sich verschiedene Angaben bei entsprechender Ansteuerung sichtbar machen. Bei elektrischen Geräten werden Flüssigkristall-Anzeigeelemente häufig zur Anzeige beispielsweise von Messwerten oder Zählerständen sowie Zustandsangaben benutzt. Da die Anzeige gut erkennbar sein muss, befinden sich die Flüssigkristall-Anzeigeelemente in der Regel an der Fronteinheit der elektrischen Geräte.

Zur Anbringung der Flüssigkristall-Anzeigeelemente an der Fronteinheit der elektrischen Geräte ist deren Frontplatte mit einer Ausnehmung versehen, hinter der bzw. in der im wesentlichen das jeweilige Flüssigkristall-Anzeigeelement angeordnet ist. Dies bringt den Vorteil mit sich, dass die Kontaktflächen der Flüssigkristall-Anzeigevorrichtung von der Rückseite der Frontplatte her zugänglich sind und daher von diesen Kontaktflächen wegführende Leiter ohne weiteres im Innern des elektrischen Gerätes mit einer Steuereinrichtung verbunden werden können. Die Ausnehmung in der Frontplatte gewährleistet die Ablesbarkeit des Flüssigkristall-Anzeigeelementes.

Der Erfindung liegt die Aufgabe zugrunde, die Fronteinheit eines elektrischen Gerätes in vergleichsweise einfacher Weise mit einem Flüssigkristall-Anzeigeelement unter Verbesserung der Gerätequalität zu versehen.

Die Lösung dieser Aufgabe besteht erfindungsgemäß in einer Fronteinheit eines elektrischen Gerätes mit einem Flüssigkristall-Anzeigeelement mit elektrischen Kontaktflächen und mit einer Tragfolie mit zu den Kontaktflächen führenden Leiterbahnen, wobei die Tragfolie gerätespezifisch in ihrer Gestalt und hinsichtlich der Führung der Leiterbahnen ausgebildet ist, einer Frontplatte, an der außen auf einem geschlossenen Bereich das Flüssigkristall-Anzeigeelement aufgebracht ist, und einer Deckfolie, die mindestens über das Flüssigkristall-Anzeigeelement und die Tragfolie gezogen ist und mindestens im Bereich oberhalb des Flüssigkristall-Anzeigeelementes durchsichtig ist.

Es ist zwar aus der US-Patentschrift 4,295,711 bekannt, unter Erzielung einer flachen Ausgestaltung eine Tragfolie mit Leiterbahnen zu benutzen, um Kontaktflächen eines Flüssigkristall-Anzeigeelementes über Leiterbahnen außen anschließen zu können, jedoch handelt es sich hier um eine standardmäßig hergestellte Flüssigkristall-Anzeigevorrichtung mit vorkonfektionierter Tragfolie. Die bekannte Flüssigkristall-Anzeigevorrichtung ist als ganze nur zur Montage von der Rückseite einer Fronteinheit her geeignet, weil die Leiterbahnen auf der Tragfolie oben liegen und daher geschützt innerhalb des elektrischen Gerätes hinter der Frontplatte verlaufen müssen. Beim Einsatz der bekannten Flüssigkristall-Anzeigevorrichtung an einer Fronteinheit eines elektrischen Gerätes muss demzufolge in der Frontplatte eine Ausnehmung vorgesehen werden, um das Flüssigkristall-Anzeigeelement ablesen zu können.

Ein wesentlicher Vorteil der erfindungsgemäßen Fronteinheit besteht darin, dass auf ihr das Flüssigkristall-Anzeigeelement in einfacher Weise angebracht werden kann, weil es auf der Frontplatte in einem geschlossenen Bereich aufgebracht wird, so dass eine Ausnehmung in der Frontplatte nicht erforderlich ist. Die Halterung des Flüssigkristall-Anzeigeelementes kann dabei in unterschiedlicher Weise erfolgen, beispielsweise durch Kleben oder durch das Aufbringen der Deckfolie.

Ein weiterer wesentlicher Vorteil der erfindungsgemäßen Fronteinheit besteht darin, dass durch die Aufbringung des Flüssigkristall-Anzeigeelementes auf der Vorderseite der Frontplatte mit Verzicht auf eine Ausnehmung in der Frontplatte Abdichtungsprobleme hinsichtlich z. B. Staub oder Feuchtigkeit von vornherein vermieden sind. Zwar ist bei der erfindungsgemäßen Fronteinheit eine Durchgangsöffnung zum Durchführen der Leiterbahn auf der Tragfolie in das Innere des elektrischen Gerätes notwendig, jedoch braucht diese Durchgangsöffnung nur vergleichsweise klein zu sein.

Bei einer vorteilhaften Ausführungsform der erfindungsgemäßen Fronteinheit weist die Deckfolie im Bereich des Flüssigkristall-Anzeigeelementes eine Ausprägung auf, und das Flüssigkristall-Anzeigeelement liegt teilweise in der Ausprägung und teilweise in einer Ausnehmung der Tragfolie. Mit dieser Ausführungsform lässt sich der Auftrag auf der Frontplatte durch das Aufbringen des Flüssigkristall-Anzeigeelementes vergleichsweise gering halten.

Es kann aber auch eine entsprechend stark bemessene Deckfolie mit einem Hohlraum zur Aufnahme des Flüssigkristall-Anzeigelementes verwendet werden.

Bei der erfindungsgemäßen Fronteinheit können die Leiterbahnen auf der Tragfolie in unterschiedlicher Weise mit den Kontaktflächen auf dem Flüssigkristall-Anzeigeelement verbunden werden; beispielsweise kann die Verbindung durch ein heißschmelzendes Verbindungsmaterial erfolgen, wie es beispielsweise in der oben erwähnten US-Patentschrift beschrieben ist, was ein geeignetes Material für die Tragfolie voraussetzt.

Als besonders vorteilhaft wird es jedoch angesehen, wenn die Leiterbahnen mit den Kontaktflächen des Flüssigkristall-Anzeigeelementes mit einer Leitpaste verbunden sind. Ein Vorteil dieser Ausgestaltung der erfindungsgemäßen Fronteinheit besteht darin, dass an die Qualität der Tragfolie nicht zu hohe Anforderungen gestellt werden müssen, weil sich mit einer Leitpaste bei niedriger Temperatur bereits eine zuverlässige galvanische Verbindung herstellen lässt. Geeignet sind dafür beispielsweise Silberlotpasten, die schon bei 70°C härten.

Bei einer besonders vorteilhaften Ausführungsform der erfindungsgemäßen Fronteinheit ist die Frontplatte elektrisch abschirmend und weist an einer für das elektrische Gerät EMV-(Elektromagnetische Verträglichkeit)unkritischen Stelle eine Durchführungsöffnung für die Leiterbahnen auf der Tragfolie auf, und es sind auf der Tragfolie die Leiterbahnen derart angeordnet, dass sie von den Kontaktflächen durch die Durchgangsöffnung verlaufen. Der besondere Vorteil dieser Ausführungsform besteht darin, dass die EMV-Güte des elektrischen Gerätes nicht durch eine Ausnehmung zur Aufnahme des Flüssigkristall-Anzeigeelementes beeinträchtigt wird und auch durch die Durchgangsöffnung für die Leiterbahn auf der Tragfolie ins Innere des Gerätes hinein keine EMV-schädigende Wirkung eintritt, weil bei entsprechender Ausgestaltung der Tragfolie und der Leiterbahnen auf ihr dafür Sorge getragen werden kann, dass die Durchgangsöffnung in einem EMV-unkritischen Platz auf der Fronteinheit vorgesehen ist.

Bekanntlich ist die Wirkungsweise von Flüssigkristall-Anzeigeelementen bei relativ niedrigen Temperaturen (unter 0°C) beeinträchtigt, weil sich dann ein schädlicher Kristallisationsprozess einstellen kann. Es ist deshalb allgemein bekannt - vgl. beispielsweise die US-Patentschrift 4,724,304 - einen plattenförmigen Heizkörper unterhalb des Flüssigkristall-Anzeigeelementes vorzusehen.

Gemäß einer weiterer Ausgestaltung der Erfindung lässt sich eine Beheizung dadurch besonders gut und einfach sicherstellen, dass eine Heizfolie unterhalb der Tragfolie angeordnet ist und mit ihrem elektrische Heizelemente aufweisenden Bereich unterhalb des Flüssigkristall-Anzeigeelementes positioniert ist.

Auf der Heizfolie können unterschiedlich ausgebildete Heizelemente in unterschiedlicher Weise angeordnet sein. Als besonders vorteilhaft wird es angesehen, wenn die Heizelemente aus einer mäanderförmig auf der Heizfolie aufgebrachten Leitpaste mit definiertem elektrischem Widerstand bestehen.

Um nicht ständig eine Beheizung der Flüssigkristall-Anzeigevorrichtung vorzunehmen, ist vorteilhafterweise an der Frontplatte ein Temperatursensor angebracht, dessen Ausgangsgröße zur Steuerung der Heizelemente in Bezug auf die Stärke des durchfließenden Stromes verwendet wird.

Bei einer weiteren vorteilhaften Ausführung der erfindungsgemäßen Fronteinheit ist mindestens eine einen Leitungsverlauf charakterisierende Linie an der Deckfolie und an mindestens einer Unterbrechungsstelle dieser Linie ein Flüssigkristall-Anzeigelement als Stellungsmelder vorhanden.

Zur weiteren Erläuterung der Erfindung ist in
Figur 1 eine (verkleinerte) Draufsicht auf ein Ausführungsbeispiel der erfindungsgemäßen Fronteinheit und in
Figur 2 ein Schnitt durch den Bereich A nach Figur 1 dargestellt.

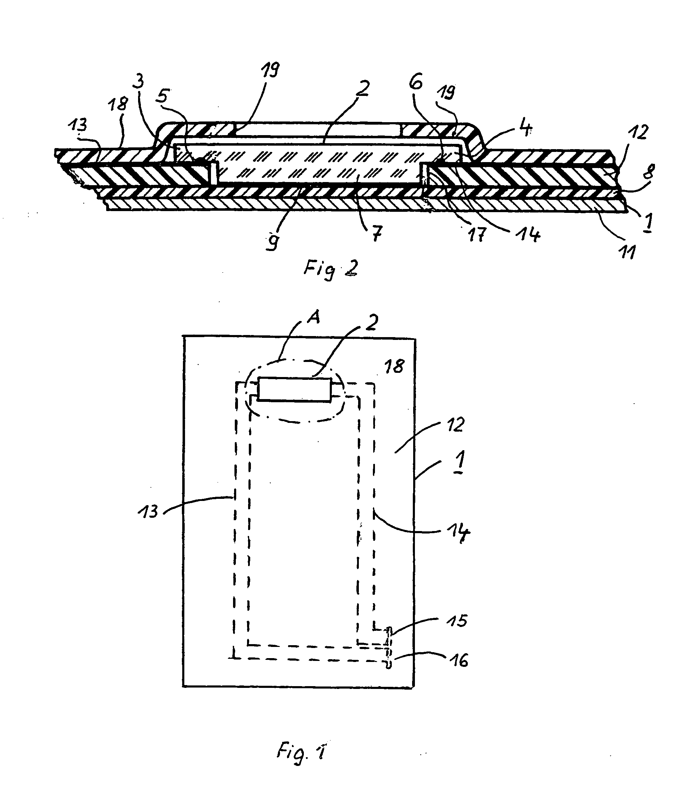

Wie die Figuren zeigen, ist auf einer Fronteinheit 1 ein Flüssigkristall-Anzeigeelement 2 angeordnet, das unter seitlichen Vorsprüngen 3 und 4 Kontaktflächen 5 und 6 aufweist. Das Flüssigkristall-Anzeigeelement 2 ist mit seinem in der Figur 2 unteren Bereich 7 mit einer Heizfolie 8 verbunden, die dort Heizelemente 9 aus einer mäanderförmig aufgebrachten Leitpaste mit definiertem elektrischen Widerstand aufweist. Zu dieser Leitpaste führen in der Figur der besseren Übersichtlichkeit halber nicht dargestellte Anschlussleitungen. Die Heizfolie 8 ihrerseits ist fest an einer elektrisch abschirmend wirkenden Frontplatte 11 der Fronteinheit 1 befestigt.

Oberhalb der Heizfolie 8 befindet sich eine Tragfolie 12, auf deren in der Figur 2 oberen Seite Leiterbahnen 13 und 14 verlaufen, die zu den Kontaktflächen 5 und 6 geführt sind; diese Leiterbahnen 13 und 14 bestehen vorzugsweise aus Leitpaste. Wie die Figur 1 zeigt, sind die Leiterbahnen 13 und 14 auf der Tragfolie 12 gerätespezifisch geführt, indem sie zu einer Durchgangsöffnung 15 geführt sind, durch die die Tragfolie 12 mit den Leiterbahnen 13 und 14 in das Innere des elektrischen Gerätes, also hinter die Fronteinheit 1, geführt ist. Kommt es bei einem elektrischen Gerät auf die EMV-Güte an, dann ist die Durchgangsöffnung 15 so auf der Fronteinheit 1 platziert, dass sie an einer EMV-unkritischen Stelle 16 liegt.

Wie die Figur 2 ferner erkennen lässt, ist die Tragfolie 12 im Bereich des Flüssigkristall-Anzeigeelementes 2 mit einer Ausnehmung 17 versehen, in die das Flüssigkristall-Anzeigeelement mit seinem unteren Teil 7 eingesetzt ist.

Über die Anordnung vom Flüssigkristall-Anzeigeelement 2 und Tragfolie 12 ist eine Deckfolie 18 mit einer Ausprägung 19 so gezogen, dass sie mindestens das Flüssigkristall-Anzeigeelement 2 und die Tragfolie 12 bedeckt; die Figur 1 zeigt, dass die Fronteinheit 1 ganzflächig mit der Deckfolie 18 überzogen ist. Um eine gute Ablesbarkeit des Flüssigkristall-Anzeigeelementes 2 zu gewährleisten, ist die Deckfolie 18 mindestens im Bereich ihrer Ausprägung oberhalb des Flüssigkristall-Anzeigeelementes 2 durchsichtig.

Wenn das Flüssigkristall-Anzeigeelement 2 einen Stellungsmelder für einen Schalter bilden soll, dann trägt die Deckfolie 18 mindestens eine in den Figuren nicht dargestellte Linie zur Charakterisierung eines Leitungsverlaufs. Diese Linie kann beispielsweise in einer Ebene parallel zur Zeichnungsebene gemäß Figur 1 auf der Deckfolie 18 verlaufen. Wird im Hinblick auf die Stellung beispielsweise eines Schalters in einer elektrischen Anlage angezeigt, dass dieser Schalter geschlossen ist, dann wird durch eine nicht gezeigte elektronische Steueranordnung dafür gesorgt, dass das Flüssigkristall-Anzeigeelement 2 einen Balken bildet, der sich in Richtung der nicht erkennbaren Linie erstreckt, wodurch ein geschlossener Schalter symbolisiert wird. Bei offenem Schalter wird das Flüssigkristall-Anzeigeelement 2 so angesteuert, dass ein Balken mit einer Richtung senkrecht zur Zeichenebene gebildet wird.

## Patentansprüche

1. Fronteinheit (1) eines elektrischen Gerätes mit
- einem Flüssigkristall-Anzeigeelement (2) mit elektrischen Kontaktflächen (5, 6) und mit einer Tragfolie (12) mit zu den Kontaktflächen (5, 6) führenden Leiterbahnen (13, 14),
- wobei die Tragfolie (12) gerätespezifisch in ihrer Gestalt und hinsichtlich der Führung der Leiterbahnen (13, 14) ausgebildet ist,
- einer Frontplatte (11), an der außen auf einem geschlossenen Bereich das Flüssigkristall-Anzeigeelement (2) aufgebracht ist, und
- einer Deckfolie (18), die mindestens über das Flüssigkristall-Anzeigeelement (2) und die Tragfolie (12) gezogen ist und mindestens im Bereich oberhalb des Flüssigkristall-Anzeigeelementes (2) durchsichtig ist.

2. Fronteinheit nach Anspruch 1,
**dadurch gekennzeichnet, dass**
- die Deckfolie (18) im Bereich des Flüssigkristall-Anzeigeelementes (2) eine Ausprägung (19) aufweist und
- das Flüssigkristall-Anzeigeelement (2) teilweise in der Ausprägung (19) und teilweise in einer Ausnehmung (17) der Tragfolie (12) liegt.

3. Fronteinheit nach Anspruch 1 oder 2,
**dadurch gekennzeichnet, dass**
- die Leiterbahnen (13, 14) mit den Kontaktflächen (5, 6) des Flüssigkristall-Anzeigeelementes (2) mit einer Leitpaste verbunden sind.

4. Fronteinheit nach Fronteinheit nach Anspruch 1,
**dadurch gekennzeichnet, dass**
- die Frontplatte (11) elektrisch abschirmend ist und an einer für das elektrische Gerät EMV-unkritischen Stelle (16) eine Durchführungsöffnung (15) für die Leiterbahnen (13, 14) auf der Tragfolie (12) aufweist und
- auf der Tragfolie (12) die Leiterbahnen (13, 14) derart angeordnet sind, dass sie von den Kontaktflächen (5, 6) durch die Durchgangsöffnung (15) verlaufen.

5. Fronteinheit nach einem der vorangehenden Ansprüche,
**dadurch gekennzeichnet, dass**
- eine Heizfolie (8) unterhalb der Tragfolie (12) angeordnet ist und mit ihrem elektrische Heizelemente (9) aufweisenden Bereich unterhalb des Flüssigkristall-Anzeigeelementes (2) positioniert ist.

6. Fronteinheit nach Anspruch 5,
**dadurch gekennzeichnet, dass**
- die Heizelemente (9) aus einer mäanderförmig auf der Heizfolie (8) aufgebrachten Leitpaste mit definiertem elektrischem Widerstand bestehen.

7. Fronteinheit nach Anspruch 5 oder 6,
**dadurch gekennzeichnet, dass**
- ein Temperatursensor an der Frontplatte (11) angebracht ist.

8. Fronteinheit nach einem der vorangehenden Ansprüche,
**dadurch gekennzeichnet, dass**
- mindestens eine einen Leitungsverlauf charakterisierende Linie an der Deckfolie (18) und an mindestens einer Unterbrechungsstelle dieser Linie ein Flüssigkristall-Anzeigelement als Stellungsmelder vorhanden ist.

## Claims

1. Front unit (1) of an electrical device with
- a liquid crystal display element (2) with electrical contact surfaces (5, 6) and with a support film (12) with strip conductors (13, 14) leading to the contact surfaces (5, 6),
- the support film (12) being configured specifically according to the device in terms of its structure and the way in which the strip conductors (13, 14) are routed,
- a front panel (11), on which the liquid crystal display element (2) is mounted on the outside, on a closed area, and
- a cover film (18), which is pulled over at least the liquid crystal display element (2) and the support film (12) and is transparent at least in the area above the liquid crystal display element (2).

2. Front unit according to claim 1,
**characterized in that**
- the cover film (18) has in the area of the liquid crystal display element (2) a stamped formation (19), and
- the liquid crystal display element (2) lies partly in the stamped formation (19) and partly in a recess (17) of the support film (12).

3. Front unit according to claim 1 or 2,
**characterized in that**
- the strip conductors (13, 14) are connected to the contact surfaces (5, 6) of the liquid crystal display element (2) by a conductive paste.

4. Front unit according to front unit according to claim 1,
**characterized in that**
- the front panel (11) is electrically shielding and has at a point (16) which is uncritical in terms of EMC for the electrical device a lead-through opening (15) for the strip conductors (13, 14) on the support film (12), and
- the strip conductors (13, 14) are arranged on the support film (12) in such a way that they run from the contact surfaces (5, 6) through the lead-through opening (15).

5. Front unit according to one of the preceding claims,
**characterized in that**
- a heating foil (8) is arranged underneath the support film (12) and positioned with its area that has electrical heating elements (9) underneath the liquid crystal display element (2).

6. Front unit according to claim 5,
**characterized in that**
- the heating elements (9) comprise a conductive paste of a defined electrical resistance applied in a meandering form on the heating foil (8).

7. Front unit according to claim 5 or 6,
**characterized in that**
- a temperature sensor is attached to the front panel (11).

8. Front unit according to one of the preceding claims,
**characterized in that**
- on the cover film (18) there is at least one line characterizing the path of a lead and, at at least one interruption point of this line, there is a liquid crystal display element as a position indicator.

## Revendications

1. Unité frontale (1) d'un appareil électrique comprenant
- un élément d'affichage à cristaux liquides (2), muni de surfaces de contact (5, 6) électriques et muni d'un feuille support (12) ayant des pistes conductrices (13, 14) menant aux surfaces de contact (5, 6),
- la feuille support (12) étant réalisée de manière spécifique à l'appareil en termes de configuration et de guidage des pistes conductrices (13, 14),
- une plaque frontale (11) sur laquelle est disposé l'élément d'affichage à cristaux liquides (2), à l'extérieur d'une zone fermée, et
- une feuille de couverture (18), étiré sur au moins l'élément d'affichage à cristaux liquides (2) et la feuille support (12), et transparente au moins dans la zone située au-dessus de l'élément d'affichage à cristaux liquides (2).

2. Unité frontale selon la revendication 1,
**caractérisée en ce que**
- la feuille de couverture (18) présente une empreinte (19) et
- l'élément d'affichage à cristaux liquides (2) est situé partiellement dans l'empreinte (19) et partiellement dans un évidement (17) de la feuille support (12).

3. Unité frontale selon la revendication 1 ou 2,
**caractérisée en ce que**
les pistes conductrices (13, 14) sont reliées aux surfaces de contact (5, 6) de l'élément d'affichage à cristaux liquides (2) par une pâte conductrice.

4. Unité frontale selon la revendication 1,
**caractérisée en ce que**
- la plaque frontale (11) est blindée électriquement et présente, sur une zone non critique pour la CEM (16), pour l'appareil électrique, une ouverture de passage (15) pour les pistes conductrices (13, 14) disposées sur la feuille support (12) et
- les pistes conductrices (13, 14) sont disposées sur la feuille support (12) de manière à s'étendre à partir des surfaces de contact (5, 6) en passant par l'ouverture de passage (15).

5. Unité frontale selon l'une des revendications précédentes,
**caractérisée en ce qu'**
un feuille chauffante (8) est disposée au-dessous de la feuille support (12) et, par sa zone présentant des éléments chauffants (9) électriques, est positionnée au-dessous de l'élément d'affichage à cristaux liquides (2).

6. Unité frontale selon la revendication 5,
**caractérisée en ce que**
les éléments chauffants (9) sont constitués d'une pâte conductrice présentant une résistance électrique définie et disposée en forme de méandres sur la feuille chauffante (8).

7. Unité frontale selon la revendication 5 ou 6,
**caractérisée en ce qu'**
un capteur thermique est fixé sur la plaque frontale (11).

8. Unité frontale selon l'une des revendications précédentes,
**caractérisée en ce qu'**
au moins une ligne caractérisant un parcours des lignes est prévue sur la feuille de couverture (18) et, en au moins un point d'interruption de cette ligne, est prévu un élément d'affichage à cristaux liquides en tant que détecteur de position.
